# EUROPEAN PATENT APPLICATION

(11) **EP 4 631 800 A1**
(43) Date of publication of application: **15.10.2025**
(21) Application number: 24170024.4
(22) Date of filing: 12.04.2024
(51) Int. Cl.: B60S 1/56, G02B 27/00, B60S 1/52

(54) **CLEANING SYSTEM, OPTICAL SENSOR ASSEMBLY COMPRISING SUCH A CLEANING SYSTEM AND VEHICLE COMPRISING SUCH AN ASSEMBLY**

(71) Applicant: Volvo Autonomous Solutions AB, 405 08 Göteborg (SE)
(72) Inventor: HERMANN, Olivier, 69440 St Maurice sur Dargoire (FR); LAMBOLEZ, Matthieu, 69230 Saint Genis Laval (FR); TON THAT, Raphaele, 69440 Mornant (FR); LACROIX, Fabien, 38200 Seyssuel (FR); BREFORT, Florence, 69100 Villeurbanne (FR); MAYA, Mhammed, 42000 Saint Etienne (FR); LIARDO, Renato, 69806 Saint Priest (FR); OLIVER, Cloe, 69100 Villeurbanne (FR)
(74) Representative: Lavoix

(57) **Abstract**

A cleaning system (200) for an optical sensor assembly (8) of a vehicle (1) comprising at least one optical sensor (9) and a casing (12) which surrounds the sensor and includes a fixed lens (20) located in the boresight (A9) of the optical sensor. The cleaning system includes a mobile lens (22) equipped with a wiper (24) and movable along the fixed lens (20) of the optical sensor (9). The wiper (24) is configured to wipe an outer surface (S20) the fixed lens when it is moved between a first position, where the mobile lens (22) is offset from the fixed lens (20), and a second position, where the mobile lens covers the fixed lens. The wiper (24) is equipped a wiping lip and with fluid ejection nozzles configured to discharge fluid toward the outer surface (S20) of the fixed lens (20).

## Description

### TECHNICAL FIELD

The disclosure relates generally to optical sensors mounted onboard vehicles. In particular aspects, the disclosure relates to a cleaning system for an optical sensor assembly of a vehicles, to an optical sensor assembly for a vehicle and to a vehicle comprising such an optical sensor assembly. The disclosure can be applied to heavy-duty vehicles, such as trucks, buses, and construction equipment, among other vehicle types. Although the disclosure may be described with respect to a particular vehicle, the disclosure is not restricted to any particular vehicle and may be applied to cars, plane etc....

### BACKGROUND

In the field of automobile vehicles, it is known to use one or several optical sensors to assist a driver when a vehicle moves on a road and, more generally, along a path or trajectory. Such sensors include cameras, radars and lidars which send appropriate signals to a control unit configured to display a corresponding information on the dashboard of the vehicle or to use these signals to adapt the behavior of the vehicle, e.g. by braking the vehicle when another vehicle is detected in front. Such a sensor is usually integrated into an optical sensor assembly, which is mounted on the outside of a vehicle and subjected to external weather conditions and to an airflow, due to relative wind when the vehicle is moving. This airflow might include insects or pollution particles. Such an optical sensor assembly therefore needs to be cleaned, which is usually made by a projection of liquid.

Existing cleaning solutions are not efficient for all types of dirtiness. For instance, supplying a liquid on a part of an optical sensor assembly might not be sufficient to remove insect remains or pollution particles.

Thus, there is a need for an efficient cleaning system for an optical sensor assembly of a vehicle, which will allow removing different types of dirtiness.

### SUMMARY

According to a first aspect of the disclosure, the invention relates to a cleaning system for an optical sensor assembly of a vehicle comprising at least one optical sensor and a casing which surrounds the sensor and includes a fixed lens located in the boresight of the optical sensor, wherein
- the cleaning system includes a mobile lens equipped with a wiper and movable along the fixed lens of the optical sensor;
- the wiper is configured to wipe an outer surface the fixed lens when it is moved between a first position, where the mobile lens is offset from the fixed lens, and a second position, where the mobile lens covers the fixed lens; and
- the wiper is equipped a wiping lip and with fluid ejection nozzles configured to discharge fluid toward the outer surface of the fixed lens.

The first aspect of the disclosure may seek to provide an efficient and environmental friendly cleaning system for an optical sensor assembly mounted onboard a vehicle. A technical benefit may include that the wiper cleans the fixed lens of the optical sensor assembly by mechanical effect, due to the wiping lip, and/or by action of the fluid, which might be air, a liquid or a mixture of air and liquid.

Optionally in some examples, including in at least one preferred example, the cleaning system includes a collector of liquid discharged from the nozzles and a recirculating circuit for recirculating the liquid recovered by the collector to the nozzles. A technical benefit may include that the collector allows recovering the cleaning liquid discharged from the nozzles and using this cleaning liquid again, thanks to its recirculation within the cleaning system. This decreases the environmental impact of a cleaning operation since the cleaning liquid is not disseminated in the environment. Thus, cleaning can occur without inducing a high water consumption and a potential pollution of the environment.

Optionally in some examples, including in at least one preferred example, the recirculating circuit comprises a tank for the liquid recovered via the collector, a filter mounted between the tank and the nozzles and, preferably, a pump. A technical benefit may include that the tank and the filter allow handling the liquid recovered via the collector and that the pump advantageously provides pressure to the liquid discharged through the nozzles.

Optionally in some examples, including in at least one preferred example, the wiping lip is configured to be in sliding contact with an outer surface of the fixed lens at least when the mobile lens moves from its first position to its second position. A technical benefit may include that the wiping lip may provide a dynamic dry or fluid cleaning of the outer surface of the fixed lens.

Optionally in some examples, including in at least one preferred example, the wiper lip is integral with the fluid ejection nozzles. A technical benefit may include that the wiper is economical and reliable.

Optionally in some examples, including in at least one preferred example, the recirculating circuit extends at least partially through or along the mobile lens. A technical benefit may include that an optical sensor assembly with the cleaning system of the invention remains compact.

Optionally in some examples, including in at least one preferred example, the wiper further includes a supply channel for supplying the nozzles with a fluid, in particular with air, with cleaning liquid or with a mixture of air and cleaning liquid. A technical benefit may include that the nozzles are efficiently supplied with cleaning fluid, without making the movable parts of the cleaning system complex and expensive.

Optionally in some examples, including in at least one preferred example, the cleaning system comprises an actuator for moving the mobile lens between its first position and its second position and vice-versa. A technical benefit may include that the mobile lens can provide a dynamic cleaning effect when it is moved by the actuator.

Optionally in some examples, including in at least one preferred example, the cleaning system comprises a control unit for piloting the actuator or for supplying the nozzles with a cleaning fluid, depending on a logical. A technical benefit may include that the control unit allows piloting the cleaning function obtained with the system of the invention according to the needs and/or to the wishes of the driver.

Optionally in some examples, including in at least one preferred example, the control unit is configured to actuate a displacement of the mobile lens or supply of the nozzles with cleaning fluid upon request of the driver, according to a pre-established schedule or when it detects that the fixed lens of the optical sensor assembly is dirty. A technical benefit may include that piloting of the cleaning function is accurate.

According to a second aspect of the disclosure, the invention relates to an optical sensor assembly configured to be mounted on a vehicle, the optical sensor assembly comprising at least one optical sensor, a casing surrounding the sensor and including a fixed lens located in the boresight of the optical sensor, wherein the optical sensor assembly includes a cleaning system as mentioned here above. The second aspect of the disclosure may seek to provide an optical sensor assembly that can provide an optical sensing function for a long period of time. A technical benefit may include that cleaning of the sensor assembly can be made by the cleaning system, without an operator having to clean the sensor assembly for a long period of time, in particular without having to refill a tank with a cleaning liquid.

Optionally in some examples, including in at least one preferred example, the fixed lens is a part of fixed wall surrounding the optical sensor and the recirculating circuit extends at least partially through or along the fixed wall. A technical benefit may include that the nozzles of the wiper car be efficiently supplied with cleaning liquid, while the sensor assembly is compact.

Optionally in some examples, including in at least one preferred example, the mobile lens is fixed with a first tube and the fixed wall is fixed with a second tube, the first and second tubes are in tight sliding engagement and they define a part of the recirculating circuit. A technical benefit may include that the two tubes constitute a part of the recirculation circuit, irrespective of the position of the mobile lens of the cleaning system.

Optionally in some examples, including in at least one preferred example, a part of the recirculating circuit is defined between, on the one hand, the fixed wall of the casing and, on the other hand, the mobile lens. A technical benefit may include that the part of the recirculating circuit defined the fixed wall and the mobile lens allows supplying the nozzles with cleaning liquid, irrespective of the position of the mobile lens of the cleaning system.

According to a third aspect of the disclosure, the invention relates to a vehicle comprising an optical sensor assembly as mentioned here above. The third aspect of the disclosure may seek to provide a vehicle which is easier to drive because the sensor assembly fulfils a detection function for a longer period of time between two maintenance operations when the sensor assembly is cleaned manually. A technical benefit may include that operation of the vehicle is safer.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** Figure 1 is a schematic perspective view of a truck equipped with an optical sensor assembly according to the invention
**[****FIG. 2]** Figure 2 is a perspective view of the optical sensor assembly of the truck of figure, in a first configuration, this optical sensor assembly including a cleaning system according to the invention;
**[****FIG. 3]** Figure 3 is a perspective view similar to figure 2 when the optical sensor assembly is in a second configuration identical to the one represented on figure 1;
**[****FIG. 4]** Figure 4 is a perspective view of the optical sensor assembly in a third configuration;
**[****FIG. 5]** Figure 5 is a perspective cut view of the optical sensor assembly of figures 2 to 4;
**[****FIG. 6]** Figure 6 is a schematic partial cut view the optical sensor assembly of figures 2 to 5;
**[****FIG. 7]** Figure 7 shows, on two inserts A) and B) a partial sectional view taken along plan VII on figure 5.

### DETAILED DESCRIPTION

The detailed description set forth below provides information and examples of the disclosed technology with sufficient detail to enable those skilled in the art to practice the disclosure.

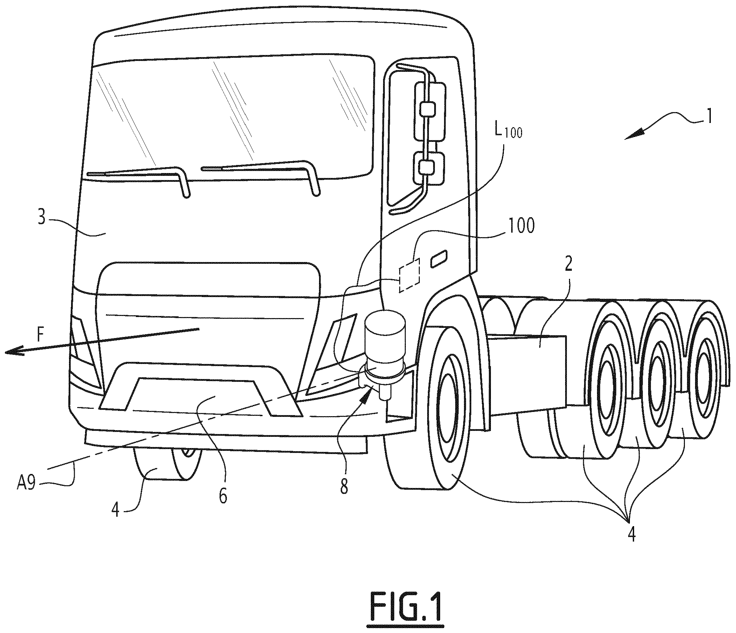

Figure 1 shows a vehicle 1 capable of moving on a non-represented road or track. In the example of figure 1, the vehicle 1 is a truck which includes a frame 2, a cabin 3 where a non-represented driver can be seated to drive the truck 1, several wheels 4 and a front bumper 6.

Alternatively, the vehicle 1 can be of another type, e.g. a bus, a personal car, a construction machine, a plane, a boat, etc.

In the example of figure 1, the truck 1 can be used to tow a non-represented trailer. In a variant, the truck can be a full body truck.

An optical sensor assembly 8 is mounted onboard the vehicle 1, in particular on the front bumper 6, and includes an optical sensor 9.

In a non-represented variant, the sensor assembly is mounted elsewhere on the truck 1, e.g. on the roof of the cabin 3.

In a non-represented variant, the sensor assembly may include several sensors, of the same kind or of different kinds. In another non-represented variant, the truck may be equipped with several optical sensor assemblies.

In the example of the figures, the optical sensor 9 is a lidar. A9 denotes the boresight of the optical sensor 9, which is an axis of the direction of view of this optical sensor. This boresight A9 is parallel to a front direction of the truck 1, represented by arrow F on figure 1.

The optical sensor assembly 8 communicates with an electronical control unit 100 mounted onboard the vehicle 1, as the sensor assembly 8. Communication between parts 8 and 100 can occur via an electrical line L₁₀₀, as shown on figure 1, via a non-represented CAN bus or wirelessly.

The control unit 100 is configured to display a corresponding information on the dashboard of the truck 1 or to use signals received from the sensor assembly 8 in order to adapt the behavior of the vehicle, e.g. by braking the vehicle when another vehicle is detected in front.

The sensor assembly 8 includes a support bracket 10 and a casing. The sensor assembly 8 is mounted on the front bumper 6 via the bracket 10.

Advantageously, the casing 12 includes a base member 14, a peripheral wall 16 and a movable cover 18. Preferably, the peripheral wall 16 is fixed with the base member 14 and surrounds the sensor 9.

Advantageously, the bracket 10 and the casing 12 are made of a rigid and fluid tight material, in practice any suitable material such as a metallic or synthetic material.

The casing 12 surrounds and protects the optical sensor 9 against weather conditions and impurities, such as insects and pollution particles. More precisely, the peripheral wall 16 defines an inner volume V12 of the casing 12 where the optical sensor 9 is located. This inner volume V12 is limited, downwardly, by the base member 14 and, upwardly, by the cover 18.

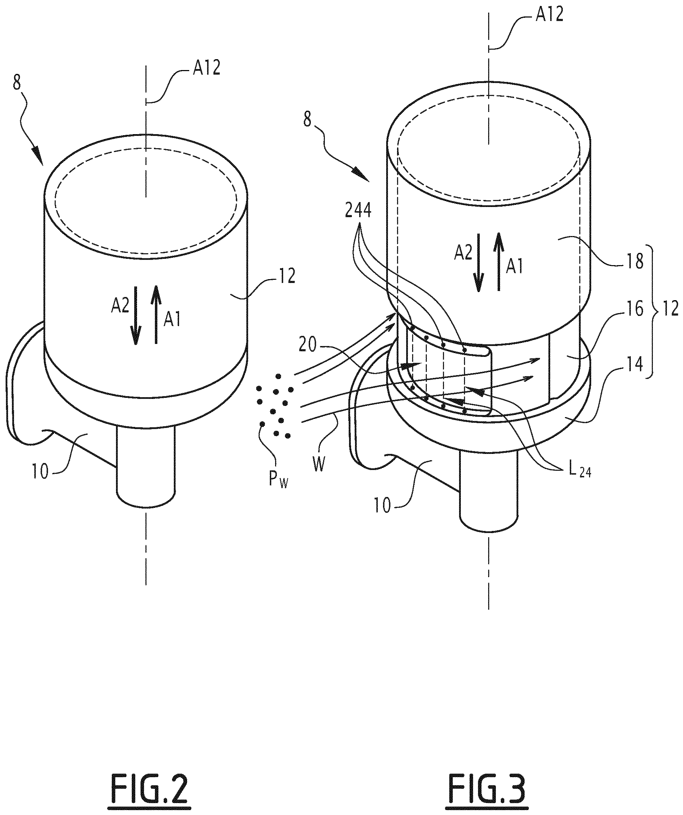

A non-represented actuator, such as an electrical or motor or an electrical or pneumatic jack, is provided for selectively moving the cover 18 parallel to a longitudinal axis A12 of the casing 12, as shown by double arrows A1 and A2 on figures 2 and 3.

In the example of the figures, the longitudinal axis A12 is vertical. In a non-represented variant of the invention, this axis can be horizontal or neither vertical nor horizontal but inclined with respect to horizontal and vertical planes. However, it is preferred in practice that axis A12 is vertical.

The peripheral wall 16 includes a fixed lens 20 which is located in front of the optical sensor 9, that is which is crossed by the boresight axis A9 of the sensor 9.

This fixed lens 20 is transparent to the waves in the wavelength range used by the optical sensor 9.

For example, this fixed lens 20 can be made of glass or synthetic material, such as Cristal plastic (PMMA or PC)

When the optical sensor assembly 8 is in the configuration of figure 2, the cover 18 protects the fixed lens 20 from pollution and impurities. In this configuration, the sensor 9 cannot be used to provide visual information to the electric control unit 100.

When it is necessary to obtain information with regard to the situation in front of the truck 1, the electronic control unit 100 controls the above-mentioned actuator in order to move the cover 18 in the direction of arrow A1 and to allow the optical sensor 9 to view in the front direction, through the fixed lens 20.

This brings the cover 18 in the configuration of figures 1 and 3.

In this configuration, when the truck 1 moves forward, a relative wind W loaded with particles Pw flows around the casing 12, in particular along the fixed lens 20. These particles may include impurities, debris, scrap, rubble, insects, soot, etc.. These impurities are progressively deposited on an outer surface S20 of the fixed lens 20, that is the surface of this lens opposite to the sensor 9.

The question of efficiently cleaning this outer surface S20 arises.

This cleaning is operated with a cleaning system 200, which includes a mobile lens 22, also movable along the longitudinal axis A12. The mobile lens is moved by a non-represented actuator, such as an electric motor or an electrical or pneumatic jack. In practice, any type of actuator may be used to move the mobile lens 22.

Advantageously, as shown on the figures, the fixed lens 20 is advantageously in the form of a part of a cylinder with a cylindrical cross section and the mobile lens 22 is also a part of the cylinder with a cylindrical cross section. The radius of the inner surface of the mobile lens 22 is preferably slightly larger than the radius of the outer surface S20 of the fixed lens 20.

The mobile lens 22 extends, around the longitudinal axis A12, on an angular sector, which covers the angular sector of the fixed lens 20.

The mobile lens 22 is equipped with a wiper 24, which, mounted along an edge of the mobile lens 22 facing the base member 14 of the casing 12.

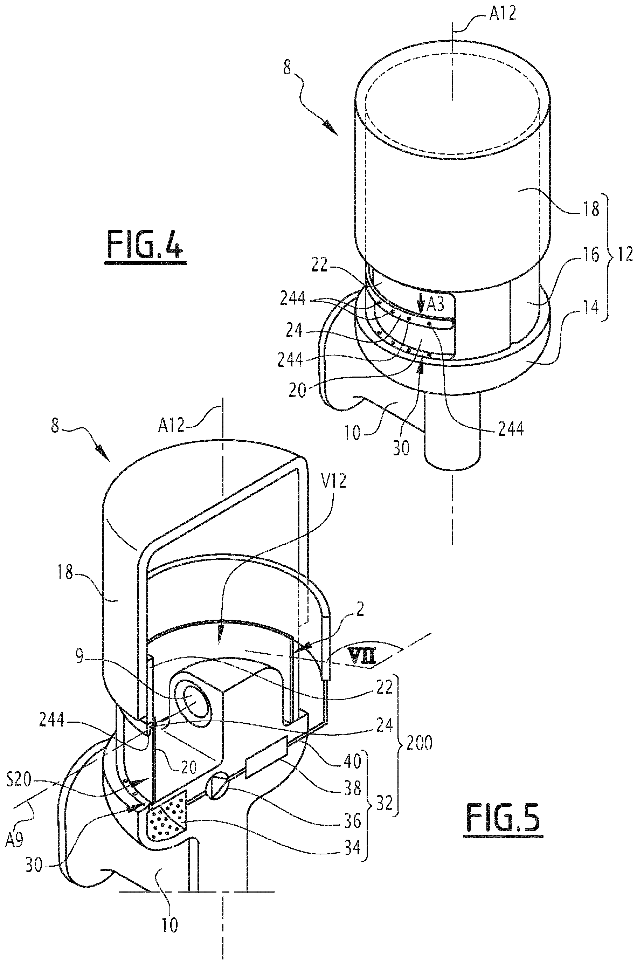

In a first position represented on figures 3 and 5, the mobile lens 22 is located above the fixed lens 20, that is opposite to the base member 14 with respect to the fixed lens. In this position, the mobile lens 22 does not interfere with the optical sensor 9, in particular with the "vision" of the optical sensor 9 through the fixed lens 20. In this position, the mobile lens 22 is offset from the fixed lens, along the longitudinal axis A12.

When it is necessary to clean the outer surface S20 of the fixed lens 20, the mobile lens 22 is moved by its actuator towards the base member 14, which also moves the wiper 24 along the outer surface S20.

The wiper 24 is equipped with a wiping lip 242 configured to be in sliding contact with the outer surface S20 of the fixed lens, and to scrap this outer surface S20, when the mobile lens 22 moves along the fixed lens towards the base member 14, in the direction of arrow A3 on figure 4. Preferably, the wiping lip is also configured to be in sliding contact with, and to scrap, the outer surface S20 when the mobile lens 22 moves away from the base member 14, in a direction opposite to arrow A3.

Advantageously, the directions of movement of the mobile lens 22 are respectively parallel to arrows A1 and A2.

Thus, the wiper 24 has a first mechanical effect to clean the outer surface S20.

The wiper 24 is also equipped with several nozzles 244 oriented towards the outer surface S20 of the fixed lens 20.

The nozzles 244 are preferably regularly distributed along the length of the wiper 24. These nozzles are supplied with a cleaning fluid, which can be air, a cleaning liquid or a mixture of air and cleaning liquid.

In the example of the figures, the cleaning liquid can be a mixture of water and a detergent such as a standard windscreen cleaning liquid

A channel 246, which extends along the wiper 24, supplies the nozzles 244 with the cleaning fluid.

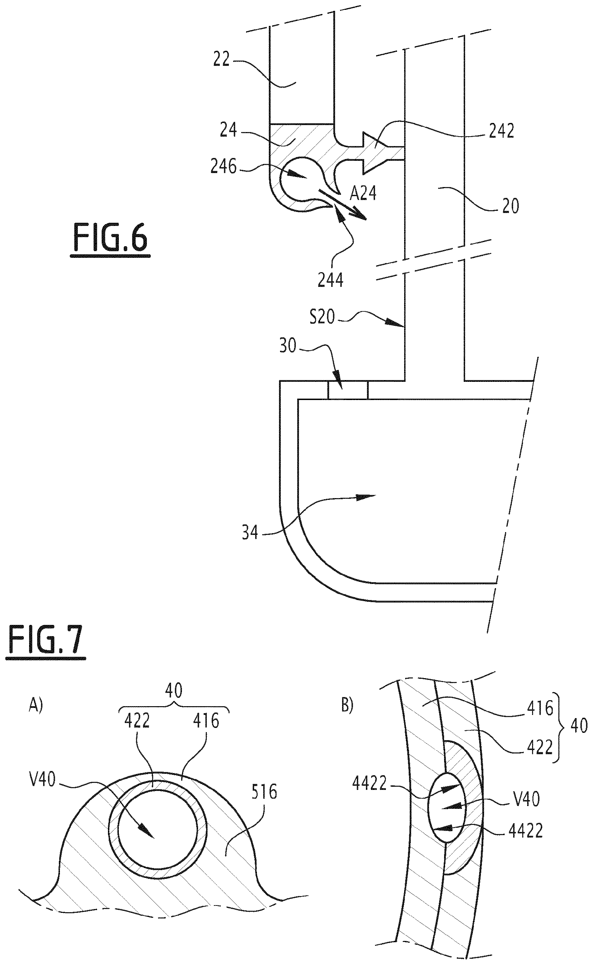

The fluid coming out of a nozzle 244 is directed in the direction of arrow A24 on figure 6 and impacts the outer surface S20.

A collector 30 is located at the foot of the fixed lens 20, on the side of its outer surface S20. This collector 30 allows directing liquid flowing on the outer surface S20 towards a tank 34 provided within the base member 14.

Thus, a quantity of cleaning liquid projected on the outer surface S20 from the nozzles 244 can be recovered via the collector 30 and directed into the tank 34.

This prevents wasting cleaning product and polluting the environment with the detergent present in the cleaning liquid.

The tank 34 belongs to a recirculating circuit 32 configured for recirculating, towards the nozzles 244, the liquid collected by the collector 30.

Indeed, known cleaning methods, which rely on the projection of liquid on a sensor, need a substantial quantity of liquid wasted after use. This cleaning liquid must be stored in a storage tank onboard the vehicle and creates a weight and volume issue on the vehicle. This cleaning liquid is generally a mix of water and a chemical agent, so that cleaning of the sensor assembly generates water consumption and dissemination of non-sustainable chemical agents in the environment. The capacity of the storage tank of the cleaning liquid limits the vehicle autonomy since, as soon as this tank is empty, the sensor functionality is not optimal, which can generate defaults on the vehicle control. The collector 30 and the recirculating circuit 32 allow addressing the liquid consumption and potential pollution issues of the prior art cleaning methods.

The recirculating circuit 32 includes, downstream of the tank 34, a pump 36, a filter 38 and a set of channels 40 connecting an outlet of the filter 38 to an inlet of the channel 246.

The channels 40 circulate within or along some parts of the casing 12, such as the peripheral wall 16 and through or along the mobile lens 22.

As shown in insert A) of figure 7, an inner tube 422 fixed with the mobile lens 22 is tightly engaged within an outer tube 416 fixed with the peripheral wall 16. For instance, the outer tube 416 can be integral with a heal 516 formed on the back of the peripheral wall 16, that is on the side of this peripheral wall opposite to the fixed lens 20. This construction allows directing the liquid coming out of the filter 38 towards the mobile lens 22 and then towards the channel 246 of the wiper 24, irrespective of the actual position of the mobile lens 22 along the longitudinal axis A12 since the inner tube 422 and the outer tube 416 together define a closed volume V40, used for the circulation of the cleaning liquid.

According to a variant schematically represented on insert B) of figure 7, the closed volume V40 for the circulation of cleaning liquid between the filter 38 and the channel 246 can be formed by two grooves G416 and G422 made in two parts 416 and 422 which belong respectively to the peripheral wall 16 and to the mobile lens 22. The two grooves G416 and G422 are located in register and define the volume V40, irrespective of the longitudinal position of the mobile lens 22 along the longitudinal axis A12.

Thanks to the cleaning system 200, different cleaning modes of the fixed lens 20 can be implemented, namely :
- i) static cleaning;
- ii) dynamic dry cleaning;
- iii) dynamic fluid cleaning.

During static cleaning, the mobile lens 22 stays in its first position, offset from the fixed lens 20. The wiping lip 242 does not scrap on the outer surface S 120. Projection of air, liquid and/or a mixture of air and liquid occurs through the nozzles 244, as shown by dotted lines L₂₄ on figure 3. If the fluid flowing along the outer surface S20 of the fixed lens 20 includes a liquid, this liquid is recovered via the collector 30 and directed toward the tank 34. From there, it can be recirculated to the nozzles 244 via the recirculating circuit 32.

During static cleaning, a preventive cleaning is implemented, in so far as the fluid(s) flow along the fixed lens 20 prevents dirtiness deposit on the outer surface S20. Air flow provides an air curtain, which prevents particles from depositing on the outer surface S20. Liquid flow works as a fountain and creates a thin liquid film on the outer surface S20, which also prevents particles from depositing on this outer surface. Depending on which fluid is discharged from the nozzles 244, an air curtain, a liquid film, or a combination of an air curtain and a liquid film provides a preventing cleaning.

During dynamic dry cleaning, the mobile lens 22 is moved along the fixed lens 20, in the direction of arrow A3. The wiping lip 242 wipes or scraps the outer surface S20. The mobile lens 22 moves from its first position, where it is offset from the fixed lens 20, to a second position, where it covers the fixed lens. The mobile lens 22 does not prevent the sensor 9 to work properly since it is transparent to the waves, in the wavelength range of operation of the sensor 9. In other words, the movement of the mobile lens to its first and second positions does not disturb the operation of the sensor 9. When it has reached its second position, the mobile lens 22 is moved back towards its first position, in a direction opposite to arrow A3, which induces another mechanical wiping or scraping of the outer surface S20 by the wiping lip 242.

During dynamic fluid cleaning, the mobile lens moves as during dynamic dry cleaning, which also induces mechanical wiping or scraping of the outer surface S20 by the wiping lip 242. In addition, projection of air, cleaning liquid or a mixture of air and cleaning liquid occurs through the nozzles 244, during the displacement of the mobile lens 22 between its first and second positions; this improves the cleaning effect.

During static cleaning and dynamic air cleaning, when only air flows through the nozzles 244, it forms an air-curtain on the outer surface S20 of the fixed lens. During static cleaning and dynamic air cleaning, when only air flows through the nozzles 244, it forms a liquid film on the outer surface S20. In both cases, this induces a preventive cleaning and prevents the deposit of dirt, pollution or impurities on this surface. This may be combined when both fluids are discharged from the nozzles 244 toward the outer surface S20.

The cleaning operations mentioned here above, and the selection between static cleaning, dynamic dry cleaning and dynamic fluid cleaning, can be automatically initiated by the electronic control unit 100 depending on a logical scheme including several factors.

A first factor of the logical scheme may be that the outer surface S20 is detected as being dirty, because the accuracy of the vision of this sensor 9 has deteriorated. A second factor of the logical scheme may be that a predetermined period has a lapsed since the last cleaning operation. A third factor of the logical scheme may be that the truck moves at sunset or at night, when the density of insects in the beam of the lights of the truck is high. Another factor of the logical scheme may be that the windscreen cleaning is triggered by a command of the driver. In this case, cleaning of the fixed lens occurs simultaneously with cleaning of the windscreen.

According to another approach, actuation of the cleaning system 200 can be triggered by the driver through the electronic control unit 100 when he/she considers that it is necessary, for instance because of the weather conditions. Then, the logical scheme is the implemented by the driver who has the choice to select static cleaning, dynamic dry cleaning or dynamic cleaning with fluid projection. An interface may be provided in the cabin 3 to allow the driver to interact with the electronic control unit 100 and select the proper cleaning mode.

As a result of the logical scheme, the electronic control unit 100 controls the actuator of the mobile lens 22 and/or supplies a cleaning fluid to the nozzles 244, in function of the selected cleaning mode.

Due to the recirculation effect obtained thanks to the collector 30 and to the recirculation circuit 32, most of the liquid sprayed during a cleaning operation on the outer surface S20 can be recovered, which avoids polluting the environment and increases the vehicle autonomy, even if the capacity of the tank 34 is relatively low.

The filter 38 guarantees that the liquid collected to the nozzles 244 is free from debris and impurities that could clog the channels 40 and/or 246 or the nozzles 244.

The pump 36 guarantees that, when the nozzles 244 discharge the cleaning liquid, this occurs with a pressure high enough to obtain an efficient cleaning effect on the outer surface S40.

When air is supplied to the nozzles 244, in addition to, or instead of, the cleaning liquid coming out of the tank 34, this air comes from a non-represented pressurized circuit of the vehicle 1, via a channel system comparable to the one mentioned here above for the liquid.

Advantageously, the wiper 24 is made of a single integral part. In particular, the wiper lip 242 is integral with the nozzles 244. This implies that the wiper 24 is a simple, reliable and inexpensive part, which can be easily replaced during a maintenance operation of the truck 1.

Advantageously, the material of the wiper is a synthetic material, preferably selected between EPDM (ethylene propylene diene monomer) rubber and thermo-plastics.

As mentioned here above, the optical sensor may be a lidar. Alternatively, it may be a radar, a camera or any other type of optical sensor.

In a non-represented alternative embodiment of the invention, the mobile lens 22 may be located below the fixed lens 20 when it in its first position and the nozzles 244 can direct the fluid toward the outer surface from below. In other word, in this embodiment, the cinematics is upside-down as compared to the embodiment represented on the figures.

**Example 1:** A cleaning system for an optical sensor assembly 8 of a vehicle 1 comprising at least one optical sensor 9 and a casing 12 which surrounds the sensor and includes a fixed lens 20 located in the boresight A9 of the optical sensor, wherein
- the cleaning system includes a mobile lens 22 equipped with a wiper 24 and movable A3 along the fixed lens 20 of the optical sensor 9;
- the wiper 24 is configured to wipe an outer surface S20 the fixed lens when it is moved between a first position, where the mobile lens 22 is offset from the fixed lens 20, and a second position, where the mobile lens covers the fixed lens; and
- the wiper 24 is equipped a wiping lip 242 and with fluid ejection nozzles 244 configured to discharge fluid toward the outer surface S20 of the fixed lens 20.

**Example 2:** The cleaning system of example 1, wherein it includes a collector 30 of liquid discharged from the nozzles 244 and a recirculating circuit 32 for recirculating the liquid recovered by the collector to the nozzles 244.

**Example 3:** The cleaning system of example 2, wherein the recirculating 32 circuit comprises a tank 34 for the liquid recovered via the collector 30, a filter 38 mounted between the tank and the nozzles 244 and, preferably, a pump 36.

**Example 4:** The cleaning system of any one of examples 1-3, wherein the wiping lip 242 is configured to be in sliding contact with an outer surface S20 of the fixed lens 20 at least when the mobile lens 22 moves from its first position to its second position.

**Example 5:** The cleaning system of any one of examples 1-4, wherein the wiper lip 242 is integral with the fluid ejection nozzles 244.

**Example 6:** The cleaning system of any one of examples 1-5, wherein the recirculating circuit 32 extends at least partially through or along the mobile lens 22.

**Example 7:** The cleaning system of any one of examples 1-6, wherein the wiper 24 further includes a supply channel 246 for supplying the nozzles 244 with a fluid, in particular with air, with cleaning liquid or with a mixture of air and cleaning liquid.

**Example 8:** The cleaning system of any one of examples 1-7, further comprising an actuator for moving the mobile lens 22 between its first position and its second position and vice-versa.

**Example 9:** The cleaning system of example 8, further comprising a control unit 100 for piloting the actuator or for supplying the nozzles 244 with a cleaning fluid, depending on a logical scheme.

**Example 10:** The cleaning system of example 9, wherein the control unit 100 is configured to actuate a displacement of the mobile lens 22 or supply of the nozzles 244 with cleaning fluid upon request of the driver, according to a pre-established schedule or when it detects that the fixed lens 20 of the optical sensor assembly 8 is dirty.

**Example 11:** An optical sensor assembly 8 configured to be mounted on a vehicle 1, the optical sensor assembly comprising at least one optical sensor 9, a casing 12 surrounding the sensor and including a fixed lens 20 located in the boresight A9 of the optical sensor, wherein the optical sensor assembly 8 includes a cleaning system 200 according to examples 1 to 10.

**Example 12:** The optical sensor assembly of example 11, wherein the fixed lens 20 is a part of fixed wall 16 surrounding the optical sensor 9 and the recirculating circuit 32 extends at least partially through or along the fixed wall.

**Example 13:** The optical sensor assembly of example 12, wherein the mobile lens 22 is fixed with a first tube 422 and the fixed wall 16 is fixed with a second tube 416 and wherein the first and second tubes are in tight sliding engagement and define a part V40 of the recirculating circuit 32.

**Example 14:** The optical sensor assembly of example 12, wherein a part V40 of the recirculating circuit 32 is defined between, on the one hand, the fixed wall 16 of the casing 12 and, on the other hand, the mobile lens 22.

**Example 15:** A vehicle 1 comprising an optical sensor assembly 8 according to any of examples 11-14.

**Example 16:** The optical sensor assembly of one of examples 11 to 14, wherein the mobile lens 22 of the cleaning system 200 is at least partially transparent to the light in the wavelength range of the optical sensor 9.

**Example 17:** The optical sensor assembly of one of examples 11 to 14, wherein the optical sensor 9 is a radar or a lidar.

**Example 18:** The optical sensor assembly of one of examples 11 to 14, wherein the optical sensor 9 is a camera.

**Example 19:** The optical sensor assembly of one of examples 11 to 14, wherein the fixed lens 20 and the mobile lens 22 are parallel parts, in particular parts of cylinders with circular cross section and wherein the radius of the mobile lens is larger than the radius of the fixed lens.

**Example 20:** The optical sensor assembly of one of examples 11 to 14, wherein the fixed lens 20 is at least partially transparent to the light in the wavelength range of the optical sensor 9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cleaning system for an optical sensor assembly (8) of a vehicle (1) comprising at least one optical sensor (9) and a casing (12) which surrounds the sensor and includes a fixed lens (20) located in the boresight (A9) of the optical sensor, wherein
- the cleaning system includes a mobile lens (22) equipped with a wiper (24) and movable (A3) along the fixed lens (20) of the optical sensor (9);
- the wiper (24) is configured to wipe an outer surface (S20) the fixed lens when it is moved between a first position, where the mobile lens (22) is offset from the fixed lens (20), and a second position, where the mobile lens covers the fixed lens; and
- the wiper (24) is equipped a wiping lip (242) and with fluid ejection nozzles (244) configured to discharge fluid toward the outer surface (S20) of the fixed lens (20).

2. The cleaning system of claim 1, wherein it includes a collector (30) of liquid discharged from the nozzles (244) and a recirculating circuit (32) for recirculating the liquid recovered by the collector to the nozzles (244).

3. The cleaning system of claim 2, wherein the recirculating (32) circuit comprises a tank (34) for the liquid recovered via the collector (30), a filter (38) mounted between the tank and the nozzles (244) and, preferably, a pump (36).

4. The cleaning system of any of claims 1-3, wherein the wiping lip (242) is configured to be in sliding contact with an outer surface (S20) of the fixed lens (20) at least when the mobile lens (22) moves from its first position to its second position.

5. The cleaning system of any of claims 1-4, wherein the wiper lip (242) is integral with the fluid ejection nozzles (244).

6. The cleaning system of any of claims 1-5, wherein the recirculating circuit (32) extends at least partially through or along the mobile lens (22).

7. The cleaning system of any of claims 1-6, wherein the wiper (24) further includes a supply channel (246) for supplying the nozzles (244) with a fluid, in particular with air, with cleaning liquid or with a mixture of air and cleaning liquid.

8. The cleaning system of any of claims 1-7, further comprising an actuator for moving the mobile lens (22) between its first position and its second position and vice-versa.

9. The cleaning system of claim 8, further comprising a control unit (100) for piloting the actuator or for supplying the nozzles (244) with a cleaning fluid, depending on a logical scheme.

10. The cleaning system of claim 9, wherein the control unit (100) is configured to actuate a displacement of the mobile lens (22) or supply of the nozzles (244) with cleaning fluid upon request of the driver, according to a pre-established schedule or when it detects that the fixed lens (20) of the optical sensor assembly (8) is dirty.

11. An optical sensor assembly (8) configured to be mounted on a vehicle (1), the optical sensor assembly comprising at least one optical sensor (9), a casing (12) surrounding the sensor and including a fixed lens (20) located in the boresight (A9) of the optical sensor, wherein the optical sensor assembly (8) includes a cleaning system (200) according to any preceding claim.

12. The optical sensor assembly of claim 11, wherein the fixed lens (20) is a part of fixed wall (16) surrounding the optical sensor (9) and the recirculating circuit (32) extends at least partially through or along the fixed wall.

13. The optical sensor assembly of claim 12, wherein the mobile lens (22) is fixed with a first tube (422) and the fixed wall (16) is fixed with a second tube (416) and wherein the first and second tubes are in tight sliding engagement and define a part (V40) of the recirculating circuit (32).

14. The optical sensor assembly of claim 12, wherein a part (V40) of the recirculating circuit (32) is defined between, on the one hand, the fixed wall (16) of the casing (12) and, on the other hand, the mobile lens (22).

15. A vehicle (1) comprising an optical sensor assembly (8) according to any of claims 11-14

## Amended claims

### Amended claims in accordance with Rule 137(2) EPC.

1. A cleaning system for an optical sensor assembly (8) of a vehicle (1) comprising at least one optical sensor (9) and a casing (12) which surrounds the sensor and includes a fixed lens (20) located in the boresight (A9) of the optical sensor, wherein
- the cleaning system includes a mobile lens (22) equipped with a wiper (24) and movable (A3) along the fixed lens (20) of the optical sensor (9); and
- the wiper (24) is configured to wipe an outer surface (S20) the fixed lens when it is moved between a first position, where the mobile lens (22) is offset from the fixed lens (20), and a second position, where the mobile lens covers the fixed lens;
**characterized in that**
- the wiper (24) is equipped a wiping lip (242) and with fluid ejection nozzles (244) configured to discharge fluid toward the outer surface (S20) of the fixed lens (20); and
- the cleaning system includes a collector (30) of liquid discharged from the nozzles (244) and a recirculating circuit (32) for recirculating the liquid recovered by the collector to the nozzles (244).

2. The cleaning system of claim 1, wherein the recirculating (32) circuit comprises a tank (34) for the liquid recovered via the collector (30), a filter (38) mounted between the tank and the nozzles (244) and, preferably, a pump (36).

3. The cleaning system of any of claims 1-2, wherein the wiping lip (242) is configured to be in sliding contact with an outer surface (S20) of the fixed lens (20) at least when the mobile lens (22) moves from its first position to its second position.

4. The cleaning system of any of claims 1-3, wherein the wiper lip (242) is integral with the fluid ejection nozzles (244).

5. The cleaning system of any of claims 1-4, wherein the recirculating circuit (32) extends at least partially through or along the mobile lens (22).

6. The cleaning system of any of claims 1-5, wherein the wiper (24) further includes a supply channel (246) for supplying the nozzles (244) with a fluid, in particular with air, with cleaning liquid or with a mixture of air and cleaning liquid.

7. The cleaning system of any of claims 1-6, further comprising an actuator for moving the mobile lens (22) between its first position and its second position and vice-versa.

8. The cleaning system of claim 7, further comprising a control unit (100) for piloting the actuator or for supplying the nozzles (244) with a cleaning fluid, depending on a logical scheme.

9. The cleaning system of claim 8, wherein the control unit (100) is configured to actuate a displacement of the mobile lens (22) or supply of the nozzles (244) with cleaning fluid upon request of the driver, according to a pre-established schedule or when it detects that the fixed lens (20) of the optical sensor assembly (8) is dirty.

10. An optical sensor assembly (8) configured to be mounted on a vehicle (1), the optical sensor assembly comprising at least one optical sensor (9), a casing (12) surrounding the sensor and including a fixed lens (20) located in the boresight (A9) of the optical sensor, wherein the optical sensor assembly (8) includes a cleaning system (200) according to any preceding claim.

11. The optical sensor assembly of claim 10, wherein the fixed lens (20) is a part of fixed wall (16) surrounding the optical sensor (9) and the recirculating circuit (32) extends at least partially through or along the fixed wall.

12. The optical sensor assembly of claim 11, wherein the mobile lens (22) is fixed with a first tube (422) and the fixed wall (16) is fixed with a second tube (416) and wherein the first and second tubes are in tight sliding engagement and define a part (V40) of the recirculating circuit (32).

13. The optical sensor assembly of claim 11, wherein a part (V40) of the recirculating circuit (32) is defined between, on the one hand, the fixed wall (16) of the casing (12) and, on the other hand, the mobile lens (22).

14. The optical sensor assembly of any of claims 10-13, wherein the fixed lens (20) and the mobile lens (22) are parallel parts, in particular parts of cylinders with circular cross section and wherein the radius of the mobile lens is larger than the radius of the fixed lens.

15. A vehicle (1) comprising an optical sensor assembly (8) according to any of claims 10-14
